# EUROPÄISCHE PATENTANMELDUNG

(11) **EP 2 133 679 A1**
(43) Veröffentlichungstag der Anmeldung: **16.12.2009**
(21) Anmeldenummer: 09158345.0
(22) Anmeldetag: 21.04.2009
(51) Int. Cl.: G01L 27/00

(54) **Verfahren zum Selbstabgleich einer Sensorvorrichtung und entsprechende Sensorvorrichtung**

(30) Priorität: 12.06.2008 DE 102008002388
(71) Anmelder: ROBERT BOSCH GMBH, 70442 Stuttgart (DE)
(72) Erfinder: Guenschel, Roland, 72770 Reutlingen (DE); Loidreau, Maxime, 72770 Reutlingen (DE)

(57) **Zusammenfassung**

Die vorliegende Erfindung betrifft ein Verfahren zum Selbstabgleich einer Sensorvorrichtung und eine entsprechende Sensorvorrichtung. Das Verfahren umfasst die Schritte: Senden eines Initialisierungssignals an die Sensorvorrichtung (100') zum Versetzen der Sensorvorrichtung (100') in einen Selbstabgleichmodus; Anlegen einer externen Stimuliparametersequenz an die Sensorvorrichtung (100') in dem Selbstabgleichmodus, wobei die Sensorvorrichtung (100') anhand von im voraus gespeicherten Stimuliparametersequenzdaten im Selbstabgleichmodus erfasste Messdaten der Sensorvorrichtung (100') zur Stimuliparametersequenz zuordnet; und Berechnen und Speichern von einem oder mehreren Abgleichparametern durch die Sensorvorrichtung (100') basierend auf den während der Stimuliparametersequenz erfassten und zugeordneten Messdaten der Sensorvorrichtung (100').

## Beschreibung

### STAND DER TECHNIK

Die vorliegende Erfindung betrifft ein Verfahren zum Selbstabgleich einer Sensorvorrichtung und eine entsprechende Sensorvorrichtung.

Obwohl auf beliebige Sensorvorrichtungen anwendbar, werden die vorliegende Erfindung und die ihr zugrundeliegende Problematik im Hinblick auf einen Einsatz in Automobilen erläutert.

Beim Abgleichen und Endprüfen von Sensorvorrichtungen werden üblicherweise Test- und Handlingsysteme verwendet, die es erlauben, die Ausgangssignale der betreffenden Sensorvorrichtung durch Aufsetzen elektrischer Kontaktstifte über Sensorstimuli und Sensortemperatur mittels externer Elektronik abzugleichen. Mit anderen Worten wird die Sensorvorrichtung vorbestimmten Sensorstimuli und Sensortemperaturen unterworfen, und die Ausgangssignale entsprechend abgestimmt.

Ein Nachteil dieses Verfahrens sind Aufwand und Kosten für die Abgleichelektronik.

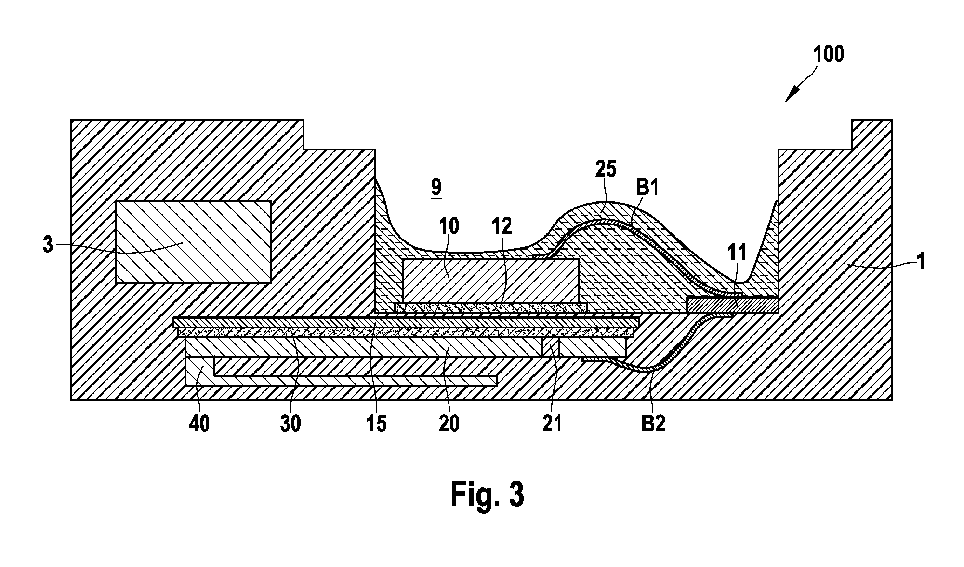

Fig. 3 ist eine schematische Darstellung einer Drucksensorvorrichtung zur Illustration der der vorliegenden Erfindung zugrundeliegenden Problematik.

In Fig. 3 bezeichnet Bezugszeichen 100 eine Drucksensorvorrichtung mit Funkschnittstelle und entsprechender Antenneneinrichtung 40, über die Drucksignale an eine (nicht gezeigte) Empfangseinrichtung gesendet werden können.

Derartige Drucksensorvorrichtungen werden beispielsweise im Automobilbereich unter anderem zur Reifendruckmessung eingesetzt.

Weiterhin bezeichnen in Fig. 3 Bezugszeichen 10 einen Drucksensorchip, welcher über eine Adhäsionsschicht 12 auf einem Moldgehäuse 1 in einer Kaverne 9 des Moldgehäuses 1 angebracht ist. Der Drucksensorchip 10 ist über einen Bonddraht B1 mit einer elektrischen Anschlussfläche 11 verbunden, über die der Drucksensorchip mit elektrischer Energie versorgt wird. Weiterhin ist der Drucksensorchip 10 in der Kaverne 9 des Moldgehäuses 1 durch ein Gel 25 gegen Umwelteinflüsse versiegelt.

Die elektrische Energieversorgung des Drucksensorchips 10 lässt sich über eine eingemoldete Batterie 3 oder alternativ über eine elektromagnetische Empfangsspule (nicht dargestellt) in induktiver Weise realisieren.

Innerhalb des Moldgehäuses 1 weiterhin vorgesehen ist ein Leadframe 15, auf dem ein Auswertungschip 20 über eine Adhäsionsschicht 30 angebracht ist. Die Antenneneinrichtung 40 verläuft ausgehend von dem Auswertechip 20 über eine bestimmte Distanz durch das Moldgehäuse 1. Elektrisch an die Energieversorgung angeschlossen ist der Auswertechip 20 über einen Bonddraht B2, welcher ebenfalls mit der elektrischen Anschlussfläche 11 verbunden ist.

Bisher ist es üblich, den Abgleich der Drucksensorvorrichtung 100 vor dem endgültigen Verpacken in dem Moldgehäuse 1 durchzuführen. Dazu wird beispielsweise eine mikromechanische Brücke mit dem Auswertechip 20 - in der Regel Verstärker, Digitalisierungsstufe und Abgleichstufe - über Druck und Temperatur vermessen. Aus den Messdaten werden mittels externer Computersoftware die Abgleichkoeffizienten oder Kennfeldkorrekturdaten für eine Kennlinie nach Kundenwunsch berechnet und diese mittels externer Abgleichansteuerelektronik in einen auf dem Auswertechip 20 befindlichen programmierbaren Nur-Lese-Speicher 21 gebrannt bzw. gespeichert. Typischerweise werden bei einem Drucksensor der Offset und die Empfindlichkeit sowie deren lineare Temperaturkoeffizienten abgeglichen. Aufwendiger gestaltet sich der Abgleich nicht linearer Druck- oder Temperaturkoeffizienten.

### VORTEILE DER ERFINDUNG

Die in Anspruch 1 definierte erfindungsgemäße Sensorvorrichtung ermöglicht einen Selbstabgleich der Sensorvorrichtung mittels integrierter Abgleichhardware und Abgleichsoftware. Die Sensorvorrichtung kann z.B. unter vorgegebener Stimulibeaufschlagung und Temperaturbeaufschlagung abgeglichen werden, ohne dass sie mit einer externen Abgleichhardware in Kommunikation treten muss.

Beim Einsatz einer Funkschnittstelle kann darüber hinaus auf das Kontaktieren mit Nadeln verzichtet werden. Die Identifikation und Datenerfassung der Sensorvorrichtungen erfolgen vorzugsweise per Funk durch digitale kodierte Signale.

Somit ermöglicht die vorliegende Erfindung einen Selbstabgleich von Sensorvorrichtungen ohne externe Abgleichelektronik, d.h. ein sogenanntes Autotrimming. Ein konsequenter Bandendeabgleich im endverpackten Zustand ist möglich.

Bei drahtloser Kommunikation ergeben sich aufgrund des Wegfalls der Kontaktiernadeln zahlreiche Vorteile, wie zum Beispiel eine vereinfachte Beaufschlagung chemischer oder physikalischer Stimuli, ein einfaches Handling während des Abgleichs, eine Erhöhung der Zuverlässigkeit und Qualitätsverbesserung des Abgleichs durch Wegfall des Kontaktiereinflusses, eine Gehäuseverkleinerung und Kostensenkung durch den Wegfall der Abgleichkontaktstifte und des Steckers beziehungsweise einer Drahtschnittstelle, sowie eine zusätzliche Kosteneinsparung, da die Anzahl der gleichzeitig abgleichbaren Sensoren nicht durch eine externe Abgleichelektronik beschränkt ist, das heißt eine beliebige Anzahl von Sensoren simultan und vollautomatisch abgeglichen werden kann.

Wird der Abgleich mit unidirektionaler Kommunikation durchgeführt, d.h. nur die Sensorvorrichtung sendet, ergibt sich ein weiterer Vorteil, nämlich die Einsparung einer dedizierten Empfangselektronik im Sensormodul. Der Abgleichvorgang muss dann durch eine anders geartete Informationsübertragung zum Sensor gestartet werden, beispielsweise über eine definierte mechanische oder chemische oder elektrische Stimulisequenz. Diese Stimulisequenz kann entweder auf den Sensorchip wirken oder bei drahtloser Energieversorgung zum Beispiel auf eine induktive Spannungsversorgung.

Bevorzugte Anwendungen sind daher Sensorvorrichtungen mit chemischen oder mechanischen Stimuli, insbesondere digitale Drucksensoren mit Radiofrequenz-Schnittstelle zur Reifendruckmessung.

Die in den Unteransprüchen aufgeführten Merkmale beziehen sich auf vorteilhafte Weiterbildungen und Verbesserungen des jeweiligen Gegenstandes der Erfindung.

Gemäß einer bevorzugten Weiterbildung umfasst das Senden des Initialisierungssignals das Senden eines Musters einer durch die Sensoreinrichtung zu erfassenden physikalischen oder chemischen Größe. Alternativ dazu wird die Sensorvorrichtung durch ein externes Energieversorgungsmodul mit Energie versorgt, wobei das Senden des Initialisierungssignals mittels Senden eines Musters durch Modulation der Energieversorgung geschieht. Dies erspart das Vorsehen einer dedizierten Empfangseinrichtung zum Initialisieren des Selbstabgleichmodus.

Gemäß einer weiteren bevorzugten Weiterbildung ist die Sensorvorrichtung durch eine Mehrzahl verschiedener Initialisierungssignale in den Selbstabgleichmodus versetzbar, wobei beim Senden eines der Initialisierungssignale entsprechende im voraus gespeicherte Stimuliparametersequenzdaten einer Mehrzahl von gespeicherten Stimuliparametersequenzdatensätzen selektiert und anhand der selektierten Stimuliparametersequenzdaten im Selbstabgleichmodus erfasste Messdaten der Sensorvorrichtung (100') zur Stimuliparametersequenz zuordnet.

Gemäß einer bevorzugten Weiterbildung ist die Sensorvorrichtung in einen Wake-Up-Zustand und in einen Sleep-Zustand versetzbar und wird nach dem Selbstabgleich automatisch in den Sleep-Zustand versetzt. Damit ist nach dem Selbstabgleich ein sequenzielles Wake-up mit sofortiger Endprüfung der Drucksensorfunktion mit den programmierten Abgleichparametern möglich.

### ZEICHNUNGEN

Ausführungsbeispiele der Erfindung sind in der Zeichnung dargestellt und in der nachfolgenden Beschreibung näher erläutert.

Es zeigen:
- Fig. 1: eine schematische Darstellung einer Drucksensorvorrichtung gemäß einer Ausführungsform der vorliegenden Erfindung;
- Fig. 2: ein Flussdiagramm eines Verfahrens zum Selbstabgleich einer Drucksensorvorrichtung gemäß der Ausführungsform der vorliegenden Erfindung; und
- Fig. 3: eine schematische Darstellung einer Drucksensorvorrichtung zur Illustration der der vorliegenden Erfindung zugrundeliegenden Problematik.

### BESCHREIBUNG VON AUSFÜHRUNGSBEISPIELEN

In den Figuren bezeichnen gleiche Bezugszeichen gleiche bzw. funktionsgleiche Elemente.

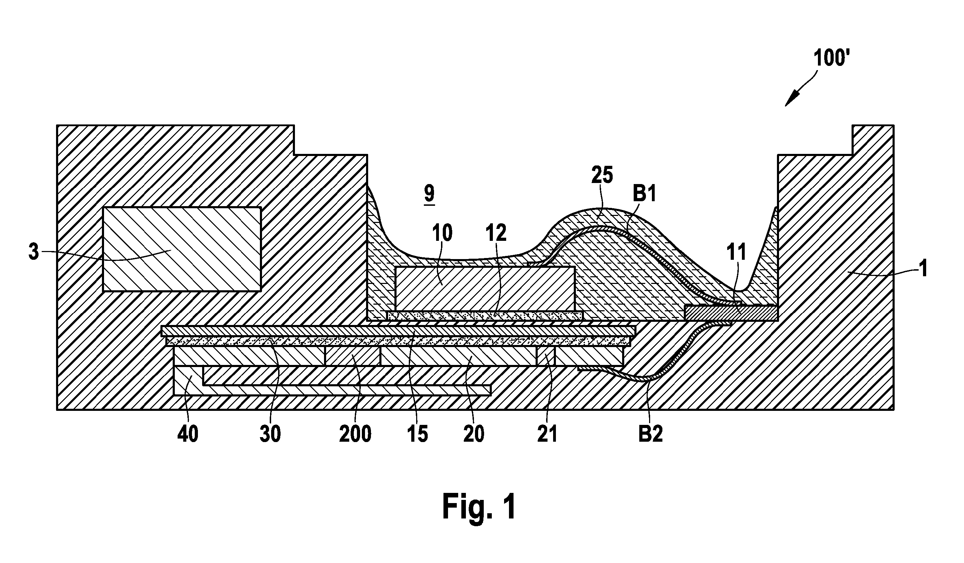

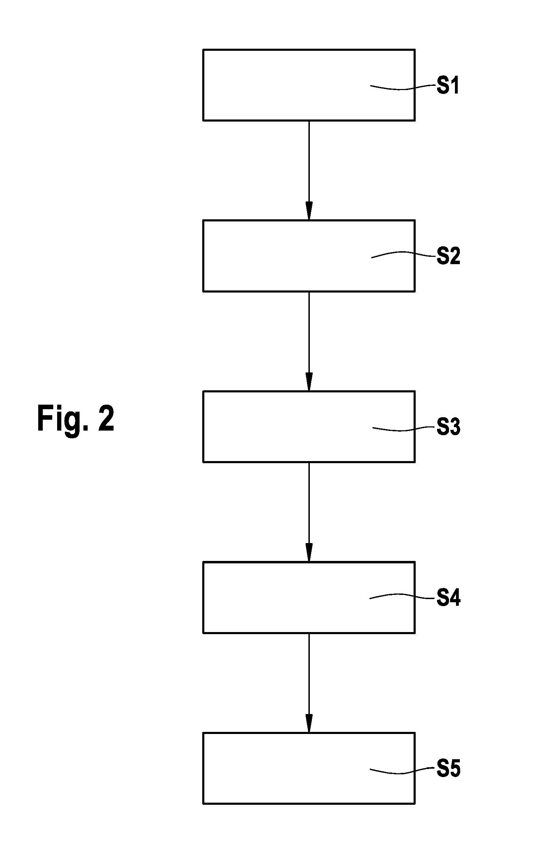

Fig. 1 ist eine schematische Darstellung einer Drucksensorvorrichtung gemäß einer Ausführungsform der vorliegenden Erfindung, und Fig. 2 ist ein Flussdiagramm eines Verfahrens zum Selbstabgleich der Drucksensorvorrichtung gemäß Fig. 1.

Zusätzlich vorgesehen in der Drucksensorvorrichtung 101' gemäß Fig. 1 im Vergleich zur beispielhaften, oben erläuterten Drucksensorvorrichtung 100 gemäß Fig. 3 ist eine Schaltungseinrichtung 200, welche einen chipinternen Selbstabgleich ermöglicht, das heißt sie enthält die notwendige Abgleichansteuerelektronik bzw. -hardware und Abgleichsoftware im Auswertechip 20.

Es sollte erwähnt werden, dass die Schaltungseinrichtung 200 auch in einem separaten Chip vorgesehen werden könnte, aber aus Kostengründen zweckmäßigerweise im Auswertechip 20 integriert ist.

Dem Auswertechip 20 kann beispielsweise beim Vormessen über Adressbits eine eindeutige Identifizierungsadresse einprogrammiert werden. Dies ermöglicht die spätere Identifikation der Drucksensorvorrichtung 100' anhand dieser vorprogrammierten Adresse und somit einen gleichzeitigen Abgleich einer Vielzahl von Drucksensorvorrichtungen 100'.

Für den Fall, dass die Sensorvorrichtung 100' nicht über die eingemoldete Batterie 3, wie in Fig. 1 und 3 dargestellt, versorgt wird, sondern drahtlos über eine integrierte Spule mit Energie versorgt wird, besteht die Möglichkeit, den Abgleich über ein aufmoduliertes elektromagnetisches Signal zu initiieren, das heißt der auf dem Auswertechip 20 vorgesehenen Software mitzuteilen, wann der Abgleich starten soll, welche Stimuli bzw. andere Parameter, wie z.B. Temperaturen, anliegen usw.

Ist die Sensorvorrichtung, wie in Fig. 1 und 3 dargestellt, lediglich mit einer unidirektionalen Funksendeschnittstelle und der dargestellten Versorgung über die Batterie 3 ausgestattet, kann der Auswertechip 20 durch eine vorbestimmte Druckstimulation des Drucksensorchips 10 in den Abgleichzustand versetzt werden.

Eine derartige Aktivierung könnte bei Reifendrucksensoren, die mit einer Sleep- und Wake-up-Funktion ausgestattet sind, um einen Stromsparmodus bei ruhenden Fahrzeugen zu ermöglichen, anknüpfen.

Mit Bezug auf Fig. 2 wird bei der vorliegenden Ausführungsform im Schritt S1 ein vorbestimmtes Druckmuster zur Abgleichinitialisierung an den Sensorchip 10 angelegt. Dies kann beispielsweise in einer entsprechenden Druckkammer erfolgen.

Aufgrund eines oder mehrerer im voraus in der Schaltungseinrichtung 200 gespeicherter Druckmuster startet die Schaltungseinrichtung 200 in Schritt S2 die Synchronisationssoftware für einen im voraus definierten Druck-Temperatur-Zeit-Verlauf des folgenden Abgleichvorganges.

Durch den definierten Druck-Temperatur-Zeit-Verlauf während des in Schritt S3 ablaufenden Abgleichvorganges lässt sich die Abfolge der äußeren Stimuli mit einem im Auswertechip 20 der Drucksensorvorrichtung 100' abgelegten Abgleichprogramm synchronisieren. Mit anderen Worten weiß die Sensorsoftware in der Schaltungseinrichtung 200 jederzeit, welcher Druck und welche Temperatur in der vorgegebenen Abfolge angelegt werden. Dabei sollte erwähnt werden, dass auch eine unabgeglichene Drucksensorvorrichtung 100' in der Lage ist, Druckunterschiede und -einschwingvorgänge zu erfassen. Insbesondere speichert die Schaltungseinrichtung 200 die zum jeweiligen Druck bei der entsprechenden Temperatur gehörigen Daten des Drucksensorchips 10 nach Überschreitung einer vorgegebenen Druckeinschwingzeit.

Eine weitere Stimulation durch ein vorgegebenes Druckmuster startet dann beispielsweise in Schritt S4 die Parameterberechnung und die Speicherung in dem programmierbaren Nur-Lese-Speicher 21, woran anschließend der Abgleichvorgang in Schritt S5 abgeschlossen wird.

Es sei erwähnt, dass ein derartiger Abgleich nicht notwendigerweise endgültig sein muss, denn durch Verwendung einer wieder beschreibbaren, elektrisch löschbaren, programmierbaren Nur-Lese-Speichervorrichtung (EEPROM) könnte die Durchführung eines Neuabgleichs ermöglicht werden.

Die Sensorvorrichtung 100' braucht im Abgleichmodus keine Daten zu senden. Vorteilhafterweise befindet sie sich nach der Beendigung des Abgleichs in Schritt S5 im Sleep-Modus.

Damit ist ein sequenzielles Wake-up mit sofortiger Endprüfung der Drucksensorfunktion mit den gespeicherten Parametern möglich. Über die Erkennung mittels einprogrammierter Adresse erfolgt ein Aussortieren von nicht oder fehlerhaft abgeglichenen Drucksensorvorrichtungen 100', wenn eine Vielzahl von Drucksensorvorrichtungen 100' simultan abgeglichen wurde.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere ist die Erfindung nicht nur auf Drucksensorvorrichtungen anwendbar, sondern auf beliebige Sensorvorrichtungen zur Erfassung beliebiger physikalischer oder chemischer Messgrößen, und insbesondere auch für Sensorvorrichtungen ohne Radiofrequenz-Schnittstelle.

## Patentansprüche

1. Verfahren zum Selbstabgleich einer Sensorvorrichtung mit den Schritten:
Senden eines Initialisierungssignals an die Sensorvorrichtung (100') zum Versetzen der Sensorvorrichtung (100') in einen Selbstabgleichmodus;
Anlegen einer externen Stimuliparametersequenz an die Sensorvorrichtung (100') in dem Selbstabgleichmodus, wobei die Sensorvorrichtung (100') anhand von im voraus gespeicherten Stimuliparametersequenzdaten im Selbstabgleichmodus erfasste Messdaten der Sensorvorrichtung (100') zur Stimuliparametersequenz zuordnet; und
Berechnen und Speichern von einem oder mehreren Abgleichparametern durch die Sensorvorrichtung (100') basierend auf den während der Stimuliparametersequenz erfassten und zugeordneten Messdaten der Sensorvorrichtung (100').

2. Verfahren nach Anspruch 1, wobei das Senden des Initialisierungssignals das Senden eines Musters einer durch die Sensoreinrichtung zu erfassenden physikalischen oder chemischen Größe umfasst.

3. Verfahren nach Anspruch 1, wobei die Sensorvorrichtung (100') durch ein Energieversorgungsmodul mit Energie versorgt wird und das Senden des Initialisierungssignals mittels Senden eines Musters durch Modulation der Energieversorgung geschieht.

4. Verfahren nach Anspruch 3, wobei das Energieversorgungssignal ein elektromagnetisches Signal ist, das induktiv in die Sensorvorrichtung eingekoppelt wird.

5. Verfahren nach einem der vorhergehenden Ansprüche, wobei die Sensorvorrichtung durch eine Mehrzahl verschiedener Initialisierungssignale in den Selbstabgleichmodus versetzbar ist und beim Senden eines der Initialisierungssignale entsprechende im voraus gespeicherte Stimuliparametersequenzdaten einer Mehrzahl von gespeicherten Stimuliparametersequenzdatensätzen selektiert und anhand der selektierten Stimuliparametersequenzdaten im Selbstabgleichmodus erfasste Messdaten der Sensorvorrichtung (100') zur Stimuliparametersequenz zuordnet.

6. Verfahren nach einem der vorhergehenden Ansprüche, wobei die Sensorvorrichtung (100') in einen Wake-Up-Zustand und in einen Sleep-Zustand versetzbar ist und nach dem Selbstabgleich automatisch in den Sleep-Zustand versetzt wird.

7. Verfahren nach einem der vorhergehenden Ansprüche, wobei die Sensorvorrichtung (100') eine individuelle Identifikationsadresse aufweist mittels der sie beim Ausgeben von Messdaten identifizierbar ist.

8. Sensorvorrichtung mit:
einem Sensorchip (10) ;
einem Auswertechip (20); und
einer Schaltungseinrichtung (200), welche derart gestaltet ist, dass sie
beim Senden eines Initialisierungssignals an die Sensorvorrichtung (100') die Sensorvorrichtung (100') in einen Selbstabgleichmodus versetzt;
beim Anlegen einer externen Stimuliparametersequenz an die Sensorvorrichtung (100') in dem Selbstabgleichmodus anhand von im voraus gespeicherten Stimuliparametersequenzdaten im Selbstabgleichmodus erfasste Messdaten der Sensorvorrichtung (100') zur Stimuliparametersequenz zuordnet; und
ein Berechnen und Speichern von einem oder mehreren Abgleichparametern durch die Sensorvorrichtung (100') basierend auf den während der Stimuliparametersequenz erfassten und zugeordneten Messdaten der Sensorvorrichtung (100') durchführt.

9. Sensorvorrichtung nach Anspruch 8, wobei die Schaltungseinrichtung (200) auf dem Auswertechip (20) integriert ist.

10. Sensorvorrichtung nach Anspruch 8 oder 9, wobei der Sensorchip (10) ein Drucksensorchip ist.

11. Sensorvorrichtung nach Anspruch 8, 9 oder 10, wobei die Sensorvorrichtung (100') in einen Wake-Up-Zustand und in einen Sleep-Zustand versetzbar ist und die Schaltungseinrichtung (200) derart gestaltet ist, dass sie die Sensorvorrichtung (100') nach dem Selbstabgleich automatisch in den Sleep-Zustand versetzt.

12. Sensorvorrichtung nach einem der Ansprüche 8 bis 11, wobei die Sensorvorrichtung (100') eine individuelle Identifikationsadresse aufweist mittels der sie beim Ausgeben von Messdaten identifizierbar ist.
